# EUROPÄISCHE PATENTANMELDUNG

(11) **EP 2 340 748 A1**
(43) Veröffentlichungstag der Anmeldung: **06.07.2011**
(21) Anmeldenummer: 10193987.4
(22) Anmeldetag: 07.12.2010
(51) Int. Cl.: A47J 31/00, A47J 31/30, A47J 31/36, A47J 31/46

(54) **Verfahren zum Brühen von Heißgetränken und Heißgetränke-Zubereitungsmaschine**

(30) Priorität: 29.12.2009 DE 102009055385
(71) Anmelder: BSH Bosch und Siemens Hausgeräte GmbH, 81739 München (DE)
(72) Erfinder: Ostermaier, Albert, 83371, Stein a.d. Traun (DE)

(57) **Zusammenfassung**

Die Erfindung betrifft ein Verfahren zum Brühen von Heißgetränken in einer Brühkammer (1) mit einem Einlass (7) und einem Auslass (9), bei dem ein Brühgut mit heißer Flüssigkeit und/oder Dampf mit einem bestimmten Brühdruck beaufschlagt wird. Es ist erfindungsgemäß dadurch weitergebildet, dass der Brühdruck während des Verfahrens gesteuert variiert wird. Außerdem betrifft die Erfindung eine entsprechend ausgebildete Heißgetränke-Zubereitungsmaschine.

## Beschreibung

Die Erfindung betrifft ein Verfahren zum Brühen von Heißgetränken in einer Brühkammer mit einem Einlass und einem Auslass, bei dem Brühgut mit heißer Flüssigkeit und/oder Dampf unter einem bestimmten Brühdruck beaufschlagt wird. Sie betrifft außerdem eine Heißgetränke-Zubereitungsmaschine für Haushaltszwecke mit einer Brühkammer mit einem Einlass und einem Auslass und mit einer Pumpvorrichtung zur Bereitstellung eines Brühdrucks in der Brühkammer.

Die Zubereitungsart von Heißgetränken wird u.a. bestimmt durch den Brühdruck, mit dem Brühgut beaufschlagt wird. Während bei der Tee- und Filterkaffeezubereitung heißes Wasser unter Atmosphärendruck dem Brühgut zugeführt wird, wird bei der Herstellung von Espressokaffee ein Brühdruck von häufig über 5 bar, teilweise sogar von über 9 bar aufgebaut.

Um in industriellen Kaffeemaschinen einen gewünschten Brühdruck in einer Brühkammer zu erreichen, wird die Brühkammer an ihrem Auslass mit einem Auslassventil verschlossen, das erst bei einem vorab und fest definierten Mindestdruck öffnet und das fertige Getränk auslässt. Eine solche Lösung schlägt beispielsweise die US 2006/0196362 A1 für Kapsel-Kaffeemaschinen vor, sie kann jedoch auch in analoger Form für Heißgetränkemaschinen verwendet werden, bei denen das Brühgut als Ganzes und/oder als Schnittgut (beispielsweise Tee bzw. Teemischungen wie Kräuter- oder Früchtetees) oder Mahlgut (Kaffeemehl, ggf. eingearbeitet in Kaffeepads) vorliegt.

Aufgabe der Erfindung ist es, eine Heißgetränkezubereitung zu ermöglichen, die eine geschmackliche Verbesserung des Getränks ermöglicht.

Erfindungsgemäß wird diese Aufgabe durch ein Verfahren der eingangs genannten Art gelöst, bei dem der Brühdruck während des Verfahrens, insbesondere bevorzugt während eines Auslassens eines fertigen Heißgetränks über den Auslass, gesteuert variiert wird. Als Brühkammer wird ein Brühraum verstanden, in dem Brühgut bei der Getränkezubereitung mit Flüssigkeit und/oder Dampf beaufschlagt wird. Als Brühgut kann Tee oder Kaffee als Mehl oder in so genannten Pads dienen. Der Brühdruck ist der Druck, unter dem das Brühgut mit Flüssigkeit bzw. Dampf beaufschlagt wird.

Erfindungsgemäß wird der Brühdruck während des Brühvorgangs variiert, und zwar nicht zufällig, sondern während des Brühvorgangs planmäßig höher und/oder niedriger eingestellt. Der Brühvorgang reicht dabei vom Beaufschlagen des Brühguts mit Flüssigkeit oder Dampf bis zum Auslassen des fertigen Heißgetränks über den Auslass. Er umfasst daher keine Vorgänge vor dem Brühen, bei denen zum Beispiel der Brühdruck erst aufgebaut wird.

Ein Programmablauf oder Plan kann sich nach Vorgaben richten, die durch das Brühgut und die Art des gewünschten Getränks bedingt sind. Bei Kaffeegetränken kann in Abhängigkeit von der Art der Bohnen und/oder Röstung sowie von der gewünschten Art des Endprodukts, beispielsweise Filterkaffee oder Espresso, eine Veränderung des Brühdrucks erwünscht sein. Denn je nach Brühdruck und Kaffeeart werden bei der Kaffeezubereitung einzelne farb- und/oder geschmacksrelevante Bestandteile des Kaffeemehls mehr oder weniger vollständig gelöst. Entsprechend unterschiedlich sind die Farbe, Konsistenz und Konzentration von Koffein, Kaffeeölen, Bitterstoffen und anderen Aromastoffen des Endprodukts sowie ihr Verhältnis zueinander.

Während häufig eine möglichst umfassende Aufnahme des Koffeins und der geschmacks- und geruchsbildenden Aromabestandteile des Kaffeemehls gewünscht wird, sollen Bitterstoffe möglichst nicht eluiert werden. Dies gelingt besonders gut bei der schnellen Brühung unter hohen Brühdrücken.

Die gesteuerte Variierung des Brühdrucks während des Brühprozesses führt zu einem Brühdruckprofil über die Zeit, das den oben skizzierten Vorgaben durch Brühgut und Getränkewunsch Rechnung trägt. So kann der Brühdruck zu einem Zeitpunkt gedrosselt werden, an dem sich Bitterstoffe oder Koffein aus dem Brühgut lösen. Und er kann gerade zu einem Zeitpunkt besonders hoch eingestellt werden, wenn bekannter Maßen erwünschte Aromastoffe gelöst werden. Die Erfindung berücksichtigt folglich, dass unterschiedliche Stoffe unterschiedliche lange einer Flüssigkeit ausgesetzt sein müssen und/oder unterschiedlich hohe Drücke benötigen, um freigesetzt zu werden.

Eine erfindungsgemäße Heißgetränke-Zubereitungsmaschine weist daher eine Drucksteuerungseinrichtung zur Steuerung des Brühdrucks auf, durch die im Betrieb der Brühdruck variierbar ist. Die Drucksteuerungseinrichtung steuert den Brühdruck, wobei sie sowohl durch als Software als auch durch Hardware beispielsweise als Druckregulierungsstellglieds realisiert sein kann.

Gemäß einer Variante des erfindungsgemäßen Verfahrens wird der Brühdruck durch Steuerung der Pumpleistung einer Pumpvorrichtung, die stromauf des Einlasses angeordnet ist, variiert. Entsprechend ist die erfindungsgemäße Heißgetränke-Zubereitungsmaschine dadurch weitergebildet, dass die Drucksteuerungseinrichtung im Betrieb die Pumpvorrichtung steuert. Eine Pumpvorrichtung ist in einer Heißgetränke-Zubereitungsmaschine praktisch immer vorhanden, so dass eine solche Anordnung konstruktiv einfach und unter geringem Aufwand bereitzustellen ist. Es muss lediglich zusätzlich eine Drucksteuerungseinrichtung verwendet werden, während aufwändigere, beispielsweise mechanische Bauelemente nicht zwingend notwendig sind.

Während die Pumpvorrichtung bekannter Zubereitungseinrichtungen auf einen im Wesentlichen konstanten Brühdruck erzeugte, kann ihre Pumpleistung erfindungsgemäß gesteuert und den gewünschten Druckverläufen entsprechend während des Brühprozesses angepasst werden. Eine solche planmäßige, den Druckverlauf variierende Steuerung kann in bestehenden Zubereitungsmaschinen nachgerüstet werden. Ihre Steuerungslogik ist nur geringfügig komplizierter als bei bisherigen Pumpsteuerungen, so dass sie beispielsweise als einfacher Austausch-Chipbaustein auch nachträglich verbaut werden kann.

Gemäß einer alternativ oder ergänzend einsetzbaren Variante der Erfindung wird ein beim Durchströmen des Brühguts entstehendes Heißgetränk erst bei Überschreiten eines Mindest-Auslassdrucks aus der Brühkammer ausgelassen. Die erfindungsgemäße Heißgetränke-Zubereitungsmaschine ist dementsprechend dadurch weitergebildet, dass die Drucksteuerungseinrichtung ein Auslassventil bzw. ein Absperrventil am Auslass steuert. Das Auslassventil dient als Absperrvorrichtung, die Drucksteuerungseinrichtung umfasst entsprechend eine Ventilsteuerungsanordnung für das Auslassventil. Dadurch lässt sich eine leicht bedienbare und leicht zu wartende Druckregulierungsvorrichtung für den Brühdruck in einer geschlossenen Brühkammer realisieren. Zudem kann das Auslassventil zugleich als Sicherheitsventil dienen, das dann abgesperrt werden kann, wenn andere Funktionsteile der Heißgetränkemaschine nicht funktionieren oder gewartet werden. Ein Absperren des Auslassventils kann verhindern, dass Rest-Flüssigkeit austritt.

Vorteilhaft ist der Absperr-Effekt auch zum Ende eines regulären Brühprozesses. Gemäß einer bevorzugten Weiterbildung der Erfindung kann der Mindest-Auslassdruck nach oder zur Beendigung des Brühvorgangs so erhöht werden, dass der Auslass der Brühkammer abgesperrt wird. Zum Absperren kann der Schwellenwert, d. h. die notwendige Kraft zur Überwindung der Ventilabsperrung so hoch eingestellt sein, dass sie auch durch die Spitzenleistung der Pumpvorrichtung nicht geöffnet werden kann. So kann ein Nachtropfen oder Nachdampfen aus der Brühkammer nach Beendigung des Brühvorgangs ohne Verwendung zusätzlicher Absperrmittel verhindert werden. Brühreste und Restwasser, das oftmals gegen Ende einer Brühung austritt, verbleiben dadurch in der Brühkammer und gelangen nicht in die abgegebene Getränkeportion.

In einem ersten Modus des erfindungsgemäßen Verfahrens wird der Brühdruck ausgehend von einem niedrigeren Anfangs-Brühdruck auf einen höheren Betriebs-Brühdruck erhöht. Zu Beginn des Brühvorgangs herrscht also ein niedriger Brühdruck vor, der dann, bevorzugt noch während des ersten Drittels der gesamten, für das Brühen verwendeten Brühzeit, besonders bevorzugt während des ersten Viertels, so erhöht wird, dass er ein Maximum erreicht. Das Brühgut wird also nicht sofort mit dem maximalen Brühdruck beaufschlagt, sondern allmählich, beginnend mit einem niedrigen Anfangsdruck.

Denn leicht lösliche Stoffe wie den Geschmack und den Geruch beispielsweise von Kaffee positiv beeinflussende Substanzen können auch ohne hohen Druckaufwand gelöst werden, während Bitterstoffe sich unter niedrigeren Drücken schwieriger bzw. erst nach längerem Einwirken einer Flüssigkeit lösen. Würde dagegen von Beginn an ein hoher Brühdruck eingesetzt, so würden - im Speziellen bei konstant hohem Brühdruck - auch die Bitterstoffe bis zum Ende der Brühung relativ weitgehend aus dem Brühgut in das Kaffeegetränk gelangen.

In einem zweiten, alternativ oder ergänzend vorgesehenen Modus des erfindungsgemäßen Verfahrens wird der Brühdruck von einem höheren Betriebs-Brühdruck auf einen niedrigeren Brühdruck gegen Ende des Brühvorgangs reduziert. Die Reduktion erfolgt bevorzugt während des letzten Viertels, besonders bevorzugt des letzten Drittels der für das Brühen verwendeten Brühzeit. Ähnlich wie oben beschrieben hat dies wiederum den Effekt der Reduzierung von Bitterstoffen bei der Kaffeezubereitung. Da Bitterstoffe im Kaffeemehl eher gegen Ende einer Brühung freigesetzt werden, wird durch Reduzierung des Brühdrucks gegen Ende der Brühung nur ein geringerer Anteil von ihnen gelöst. Am Ende des Brühvorgangs entsteht daher in diesem bevorzugten Modus der Brühdruck-Variierung nur noch leicht gefärbte Flüssigkeit mit einem vergleichsweise niedrigen Anteil an Bitterstoffen, die im Wesentlichen der Verdünnung des Kaffeegetränks dient.

Eine erfindungsgemäße Heißgetränke-Zubereitungsmaschine, deren Drucksteuerungseinrichtung ein Auslassventil steuert, kann nach einer vorteilhaften Weiterbildung ein motorisches und/oder elektromagnetisches Betätigungselement des Auslassventils umfassen, dass die Drucksteuerungseinrichtung ansteuert. Die Öffnungskraft des Ventils lässt sich also mittels einer mechanischen Bewegung eines Betätigungselements variieren. Die Bewegung erfolgt auf Steuerbefehle der Drucksteuerungseinrichtung hin. So kann zum Beispiel die zu überwindende Federkraft eines federkraftbelasteten Auslassventils - eine besonders einfach bereitzustellende und kontrollierbare Ausführungsform eines solchen Auslassventils - über unterschiedliche Andruckkräfte gegen die Feder von der der Ventilöffnung gegenüberliegenden Seite des Ventils aus einfach mechanisch variiert werden.

Das Prinzip der Erfindung kann grundsätzlich in allen Arten von Heißgetränkemaschinen angewendet werden. Besonders effektiv es in so genannten Kolbendruckmaschinen eingesetzt werden, in denen die Brühkammer einen Brühzylinder umfasst, in dem ein Brühkolben so bewegbar angebracht ist, dass er mindestens teilweise einen Brühdruck aufbaut. Dies bedeutet, dass zumindest ein Teil des erforderlichen Brühdrucks durch eine Verdichtung mithilfe des Brühkolbens erzielt wird, während der andere Teil des Brühdrucks durch eine Pumpvorrichtung bereitgestellt werden kann.

Es ist in einer solchen Maschine nicht zwangsläufig eine Pumpvorrichtung zum Erzeugen des Brühdrucks notwendig. Die gesteuerte Variierung des Brühdrucks während des Brühvorgangs kann vorteilhafterweise ein einfaches Auslassventil mit entsprechender Ventilsteuerung übernehmen, wie es oben beschrieben ist.

Unter dem Begriff "Brühzylinder" sind alle kammerbildende Hohlkörper subsummiert, die zusammen mit einem analog geformten Kolben eine verschlossene Kammer ergeben, dessen Inhalt im Zylinder verdichtet werden kann. Möglich sind nur nicht runde oder ovale Querschnitte des Kolbens, sondern auch eckige Formen. Dabei ist es von besonderem Vorteil, wenn der Auslass im Brühkolben angeordnet ist. Bei einer solchen Anordnung kann der Brühkolben, der ja ohnehin beweglich ausgebildet ist, zur Wartung bzw. Reinigung des Auslassventils und/oder des Auslasses einfach entnommen und danach wieder in den Brühzylinder eingefügt werden.

Das Prinzip der Erfindung wird im Folgenden anhand einer Zeichnung beispielshalber noch näher erläutert. In der Zeichnung zeigen:
- Figur 1: eine schematische Schnittdarstellung einer ersten Ausführungsform einer Brühkammer,
- Figur 2: eine schematische Schnittdarstellung einer zweiten Ausführungsform einer Brühkammer,
- Figur 3: ein Diagramm zu einem möglichen Verlauf eines eingestellten Mindest-Brühdrucks zur Öffnung eines Auslassventils einer Espressobrühung,
- Figur 4: ein Diagramm zu einem möglichen Brühdruck-Verlaufs im Rahmen der Ausführungsform einer erfindungsgemäßen Espressobrühung gemäß Figur 3,
- Figur 5: ein Diagramm zu einem möglichen Verlauf eines eingestellten Mindest-Brühdrucks zur Öffnung eines Auslassventils einer Padkaffeebrühung,
- Figur 6: ein Diagramm zu einem möglichen Brühdruck-Verlaufs einer Padkaffeebrühung gemäß Figur 5,
- Figur 7: ein Diagramm zu einem möglichen Verlauf eines eingestellten Mindest-Brühdrucks zur Öffnung eines Auslassventils einer Filterkaffeebrühung,
- Figur 8: ein Diagramm zu einem möglichen Brühdruck-Verlaufs einer Filterkaffeebrühung gemäß Figur 7.

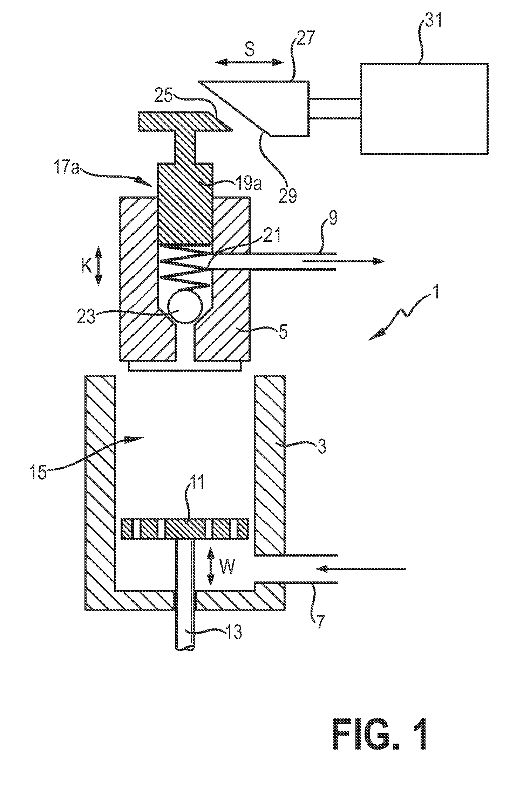

Figur 1 zeigt eine Brühkammer 1 einer Heißgetränke-Zubereitungsmaschine gemäß einer ersten Ausführungsform der Erfindung. Die Brühkammer 1 umfasst einen Brühzylinder 3 mit einem Hohlraum 15 und einen Brühkolben 5, der in einer Hubrichtung K im Brühzylinder 3 auf- und abbewegbar ist. In den Brühzylinder 3 führt ein Einlass 7 zum Zuführen von Heißwasser. Im Hohlraum 15 des Brühzylinders 3 ist ein Auswerfer 11 angeordnet, der sich im Betrieb in einer Auswerferrichtung W auf- und abbewegt. Er ist an einer Auswerferstange 13, die durch eine Öffnung in den Brühzylinder 3 hineingeführt ist, fixiert.

Im Brühkolben 5 ist ein Auslassventil 17a als Absperrventil für einen Auslass 9 angeordnet. Das Auslassventil 17a besteht aus einem Stellzylinder 19a, einer Feder 21 und einem Verschlusspfropfen 23. Der Stellzylinder 19a weist an seiner aus dem Brühkolben 5 herausragenden Seite eine schräge Abflachung 25 auf, die mit einer gegengleich geformten schrägen Abflachung 29 eines Stellglieds 27 korrespondiert. Das Stellglied 27 ist elektromagnetisch in einer Stellrichtung S verschiebbar. Eine elektronischen Steuerung als Drucksteuerungseinrichtung 31 versorgt das Stellglied 27 mit Strom zur Steuerung der elektromagnetischen Kraft.

Wenn der Stellzylinder 19a des Auslassventils 17a in Richtung des Verschlusspfropfens 23 bewegt wird, presst er die Feder 21 stärker zusammen. Dies erhöht die Kraft, die überwunden werden muss, um den Verschlusspfropfen 23 im Auslassventil 17a anzuheben, sodass ein Flüssigkeitsdurchlauf in Richtung des Auslasses 9 möglich ist.

Diese Kraft entsteht durch einen Brühdruck. Dazu fährt der Brühkolben 5 im Betrieb in den Brühzylinder 3 wie ein Stempel ein, während Heißwasser durch den Einlass 7 in den Brühzylinder gepumpt wird. Bei dem Druckaufbau liegt der Auswerfer 11 am Boden des Brühzylinders 3 auf. Auf dem Auswerfer 11 befinden sich bei der Getränkezubereitung Kaffeemehl oder Kaffeepads (nicht dargestellt).

Überschreitet der Brühdruck einen Schwellenwert, so gibt das Auslassventil 17a den Weg für die gebrühte Kaffeeflüssigkeit in den Auslass 9 frei. Der Schwellenwert wird durch Verschieben des Stellzylinders 19a während des Brühvorgangs variiert. Dadurch verändert sich auch der erforderliche Brühdruck im Hohlraum 15 der Brühkammer 1, der notwendig ist, um das Auslassventil 17a zu öffnen.

Auf Steuerbefehle der Drucksteuerungseinrichtung 31 hin verschiebt das Stellglied 27 den Stellzylinder 19a. Die Drucksteuerungseinrichtung 31 steuert auf diese Weise indirekt eine Variierung des Brühdrucks.

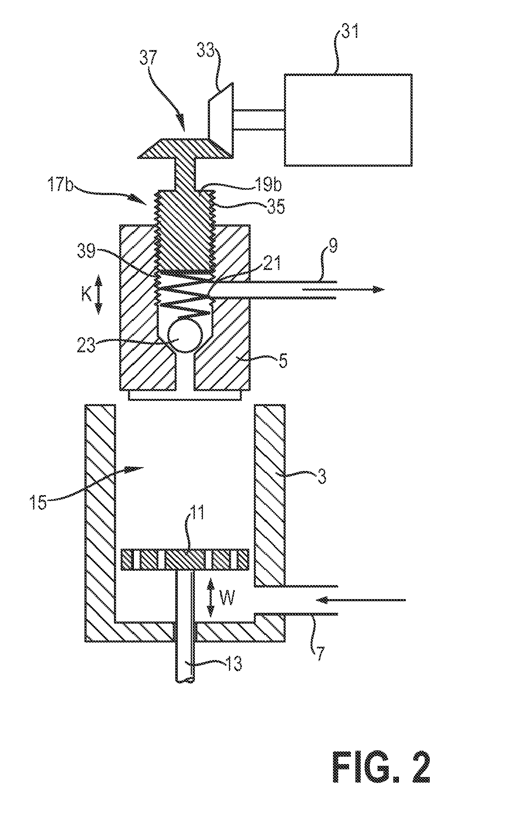

Figur 2 zeigt eine zweite Ausführungsform einer Brühkammer 1, mit im Wesentlichen demselben Aufbau wie dem der Brühkammer 1 aus Figur 1. Die Unterschiede bestehen in der Ausgestaltung des Brühkolbens 5, eines Auslassventils 17b und eines Stellglieds 33:

Das Stellglied 33 wird aufgrund von Steuerbefehlen der Drucksteuerungseinrichtung 31 über einen Motor (nicht dargestellt) rotiert. Es dreht über ein Kegelradgetriebe einen Stellzylinder 19b an, der über ein Gewinde 35 und ein Gegengewinde 39 im Inneren des Brühkolbens 5 in den Brühkolben 5 hinein- und aus ihm herausgeschraubt werden kann. Das Ein- und Ausdrehen des Stellzylinders 19b variiert indirekt den oben erwähnten Schwellenwert und damit den Brühdruck während des Brühvorgangs.

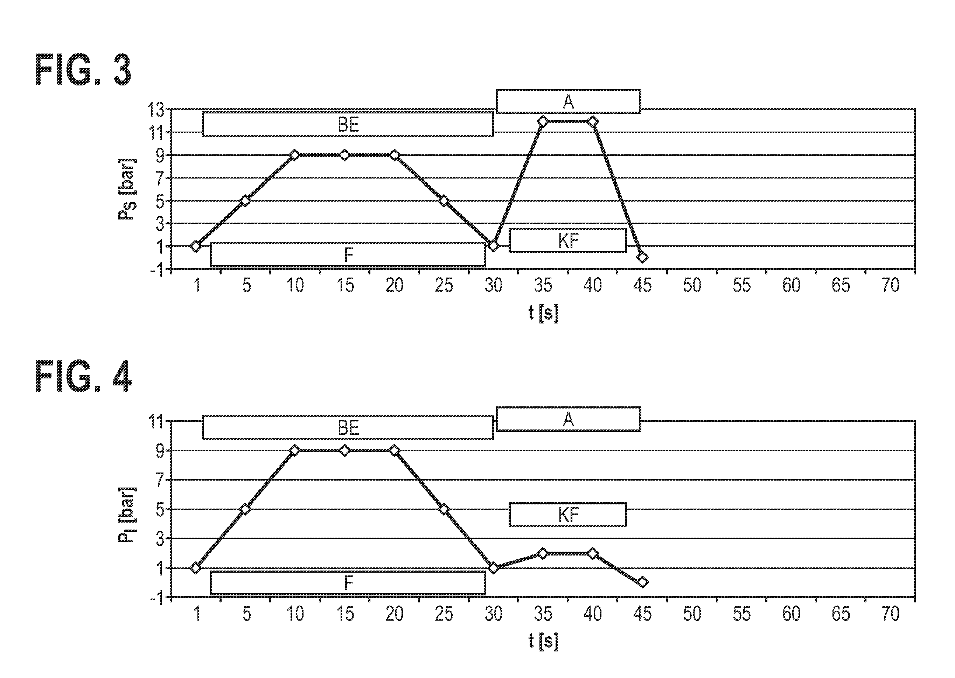

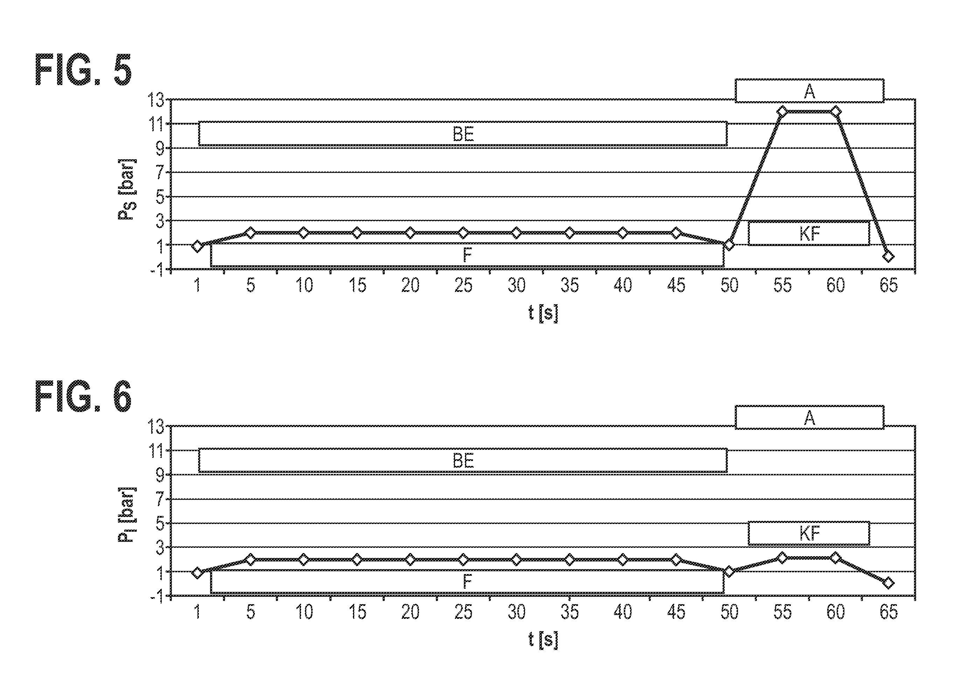

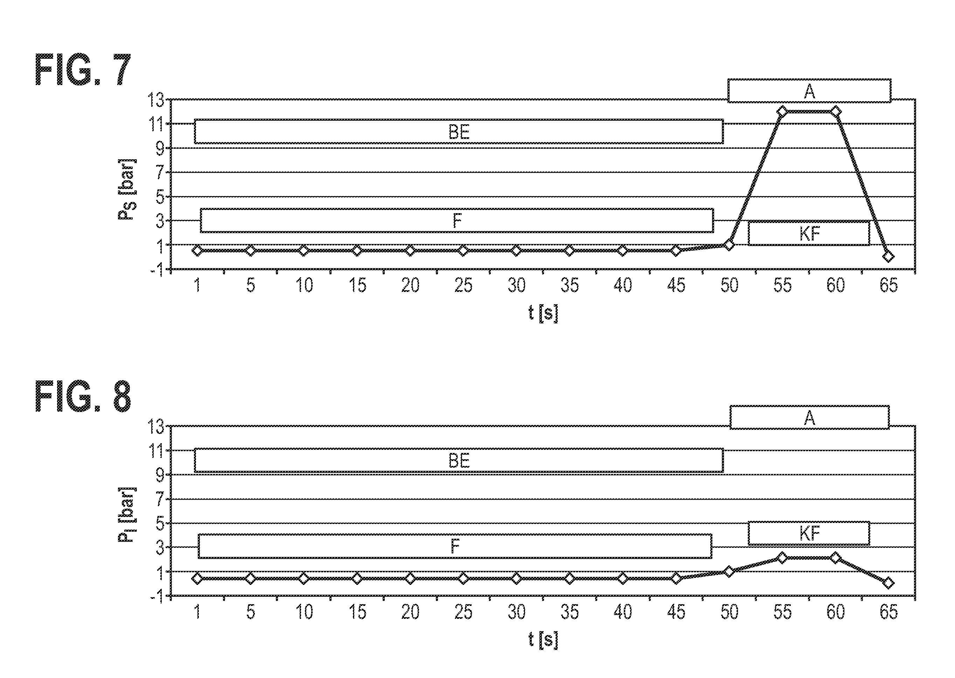

In Figuren 3 bis 8 sind Diagrammpaarungen dargestellt, die jeweils einen möglichen Verlauf eines eingestellten Mindest-Brühdrucks, an den Auslassventilen 17a oder 17b und des damit korrespondierenden tatsächlichen Brühdrucks während eines Brühprozesses zeigen. Dabei beziehen sich die Figuren 3 und 4 auf ein Espressobrühverfahren mit Drücken bis zu 9 bar, die Figuren 5 und 6 auf ein Pad-Kaffeebrühverfahren mit Drücken bis zu 2 bar und die Figuren 7 und 8 auf ein Filterkaffee-Brühverfahren, das im Wesentlichen unter atmosphärischem Druck erfolgt.

In Figur 3 ist der Kurvenverlauf des eingestellten Mindest-Brühdrucks pₛ in bar über die Zeit t in Sekunden aufgetragen, der in den Auslassventilen 17a, b eingestellt werden kann, um Espresso zu brühen. Der Mindest-Brühdruck pₛ wird innerhalb des ersten Drittels der Brühzeit kontinuierlich von 1 bar auf 9 bar angehoben, im zweiten Drittel konstant gehalten, um im dritten Drittel wieder auf 1 bar reduziert zu werden. Nach dem Espresso-Brühvorgang BE beginnt die Auswurfphase A, die mit einem Zusammenpressen der Brühreste beginnt und mit dem Auswerfen der verpressten Brühreste endet. In der Auswurfphase A wird der Mindest-Brühdruck pₛ auf ca. 12 bar hinaufgesetzt, also auf mehr, als eine herkömmliche Pumpe einer hochwertigen Espressomaschine üblicherweise leistet.

Der Effekt der Variierung des Mindest-Brühdrucks pₛ ist in Figur 4 erkennbar. Parallel mit dem Mindest-Brühdruck pₛ wird die Verdichtung in der Brühkammer 1, erhöht, so dass der Ist-Brühdruck pₗ gleich dem Mindest-Brühdruck pₛ ist. Ein ständiger Fluss F während des Brühvorgangs BE ist die Folge. Während des ersten Drittels der Brühzeit werden bereits die meisten leicht löslichen bzw. extrahierbaren Bestandteile des Kaffeemehls extrahiert. Um weitere für einen guten Kaffeegeschmack gewünschte Aromastoffe zu extrahieren, wird der Ist-Brühdruck pₗ in dieser Zeit von einem niedrigen Anfangs-Brühdruck von 1 bar auf ein Maximum, den Betriebs-Brühdruck von 9 bar, erhöht. Während des zweiten Drittels der Brühzeit wird der Ist-Brühdruck pₗ konstant gehalten. Im letzten Drittel der Brühzeit erfolgt eine Reduzierung des Ist-Brühdrucks pₗ auf den Ausgangswert, bevor die Wasserzufuhr durch den Einlass 7 (Fig. 1, 2) abgeschaltet wird. Die Druckreduzierung gegen Ende der Brühung vermeidet, dass die im Brühgut enthaltenen Bitterstoffe trotz der langen Brühzeit in großer Menge extrahiert werden. Unter reduziertem Druck wird stattdessen nur ein kleiner Anteil von ihnen gelöst.

In der Auswurfphase A ist der Ist-Brühdruck pₗ bei Weitem geringer als der Mindest-Brühdruck pₛ. Dadurch wird das Auslassventil 17a,b abrupt abgesperrt, so dass ein Nachtropfen aus dem Auslass 9 ausgeschlossen werden kann. Es ist kein Durchfluss KF mehr festzustellen.

Analoge Effekte ergeben sich beim Ausführungsbeispiel gemäß den Figuren 5 und 6, die sich auf einen Brühvorgang BP mit Kaffeepads beziehen. Die wesentlichen Unterschiede zur Espressobrühung bestehen in den niedrigeren Drücken pₛ und pₗ und in der längeren Brühzeit. Die Zeiten der Erhöhung des Ist-Brühdrucks pₗ zu Beginn und seiner Reduzierung zum Ende der Brühzeit sind kürzer, so dass sie nur zu Beginn des ersten und am letzten Ende des vierten Viertels der Brühzeit eine Rolle spielen, während im Rest der Brühzeit mit einem Betriebs-Brühdruck von 2 bar gearbeitet wird. Die Absperrwirkung in der Auswurfphase A ergibt sich analog zu den Figuren 3 und 4.

Bei einem Brühvorgang BK zur Herstellung von herkömmlichem Filterkaffee in der Brühkammer 1 gemäß Figuren 7 und 8 wird das Kaffeemehl mit Heißwasser mit ganz geringem Überdruck durchflossen. Eine Variierung des Mindest-Brühdrucks pₛ und des Ist-Brühdrucks pₗ erfolgt nur gegen Ende des Brühprozesses. Die Erhöhung des Ist-Brühdrucks pₗ dient dabei im Wesentlichen dazu, den Kaffeefluss vor der Absperrung des Auslassventils 17a, b noch aufrecht zu erhalten, der dann abrupt durch die Absperrung beendet wird, so dass kein langes Nachtröpfeln mehr zu befürchten ist. Die Variierung des Ist-Brühdrucks pₗ sorgt somit für einen geregelteren Flüssigkeitstransport nach außen.

Da es sich bei den vorhergehenden, detailliert beschriebenen Brühkammern und Druckverläufen um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Brühkammer und der mit ihr verbundenen Funktionsteile zur Realisierung der Erfindung in anderer Form als in der hier beschriebenen folgen. Ebenso kann der Druckaufbau in einer anderen Form realisiert werden, wenn dies aus Platzgründen, designerischen oder technischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: Brühkammer
- 3: Brühzylinder
- 5: Brühkolben
- 7: Einlass
- 9: Auslass
- 11: Auswerfer
- 13: Auswerferstange
- 15: Hohlraum
- 17a, 17b: Auslassventile
- 19a: Stellzylinder
- 21: Feder
- 23: Verschlusspfropfen
- 25: Abflachung
- 27: Stellglied
- 29: Abflachung
- 31: Drucksteuerungseinrichtung
- 33: Stellglied
- 35: Gewinde
- 39: Gegengewinde
- A: Auswurfphase
- BE: Brühvorgang - Espressobrühung
- BK: Brühvorgang - Filterkaffee
- BP: Brühvorgang - Kaffeepads
- F: Fluss
- K: Hubrichtung
- KF: kein Durchfluss
- S: Stellrichtung W Auswerferrichtung
- pₗ: Ist-Brühdruck
- pₛ: Mindest-Brühdruck
- t: Zeit

## Patentansprüche

1. Verfahren zum Brühen von Heißgetränken in einer Brühkammer (1) mit einem Einlass (7) und einem Auslass (9), bei dem ein Brühgut mit heißer Flüssigkeit und/oder Dampf mit einem bestimmten Brühdruck (pₗ) beaufschlagt wird, **dadurch gekennzeichnet, dass** der Brühdruck (pₗ) während des Verfahrens gesteuert variiert wird.

2. Verfahren gemäß Anspruch 1, **dadurch gekennzeichnet, dass** der Brühdruck (pₗ) durch Steuerung der Pumpleistung einer Pumpvorrichtung, die stromauf des Einlasses (7) angeordnet ist, variiert wird.

3. Verfahren gemäß Anspruch 1 oder 2, **dadurch gekennzeichnet, dass** ein Heißgetränk erst bei Überschreiten eines Mindest-Auslassdrucks (pₛ) aus der Brühkammer (1) ausgelassen wird.

4. Verfahren gemäß Anspruch 3, **dadurch gekennzeichnet, dass** der Mindest-Auslassdruck (pₛ) nach oder zur Beendigung des Brühvorgangs so erhöht wird, dass der Auslass (9) der Brühkammer (1) abgesperrt wird.

5. Verfahren gemäß einem der vorhergehenden Ansprüche, **dadurch gekennzeichnet, dass** der Brühdruck (pₗ) ausgehend von einem niedrigeren Anfangs-Brühdruck auf einen höheren Betriebs-Brühdruck erhöht wird.

6. Verfahren gemäß einem der vorhergehenden Ansprüche, **dadurch gekennzeichnet, dass** der Brühdruck (pₗ) von einem höheren Betriebs-Brühdruck auf einen niedrigeren End-Brühdruck gegen Ende des Brühvorgangs reduziert wird.

7. Heißgetränke-Zubereitungsmaschine mit einer Brühkammer (1) mit einem Einlass (7) und einem Auslass (9) und mit einer Pumpvorrichtung (3, 5) zur Bereitstellung eines Brühdrucks (pₗ) in der Brühkammer (1), **gekennzeichnet durch** eine Drucksteuerungseinrichtung (31) zur Steuerung des Brühdrucks (pₗ), **durch** die im Betrieb der Brühdruck (pₗ) variierbar ist.

8. Heißgetränke-Zubereitungsmaschine gemäß Anspruch 7, **dadurch gekennzeichnet, dass** die Drucksteuerungseinrichtung (31) ein Auslassventil (17a; 17b) besonders bevorzugt ein Absperrventil, am Auslass (9) steuert.

9. Heißgetränke-Zubereitungsmaschine gemäß Anspruch 8, **dadurch gekennzeichnet, dass** die Drucksteuerungseinrichtung (31) im Betrieb ein motorisches (33) und/oder elektromagnetisches Betätigungselement (27) des Auslassventils (17a; 17b) steuert.

10. Heißgetränke-Zubereitungsmaschine gemäß einem der Ansprüche 7 bis 9, **dadurch gekennzeichnet, dass** die Brühkammer (1) einen Brühzylinder (3) umfasst, in dem ein Brühkolben (5) so bewegbar angebracht ist, dass er mindestens teilweise einen Brühdruck (pₗ) aufbaut.
